(19) Europäisches Patentamt
European Patent Office
Office européen des brevets

(11) **EP 3 916 139 A1**

(12) **EUROPEAN PATENT APPLICATION**
published in accordance with Art. 153(4) EPC

(43) Date of publication:
**01.12.2021 Bulletin 2021/48**

(51) Int Cl.:
**D03D 1/02** $^{(2006.01)}$      **B60R 21/235** $^{(2006.01)}$

(21) Application number: **20744521.4**

(86) International application number:
**PCT/JP2020/002405**

(22) Date of filing: **23.01.2020**

(87) International publication number:
**WO 2020/153446 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.01.2019 JP 2019009344**

(71) Applicant: **TOYOBO CO., LTD.**
**Osaka-shi**
**Osaka 530-8230 (JP)**

(72) Inventors:
• **SAKAI, Masahiro**
**Otsu-shi, Shiga 520-0292 (JP)**
• **MATSUI, Yoshihiro**
**Osaka-shi, Osaka 530-8230 (JP)**
• **KANO, Kenichiro**
**Osaka-shi, Osaka 530-8230 (JP)**

(74) Representative: **Müller-Boré & Partner**
**Patentanwälte PartG mbB**
**Friedenheimer Brücke 21**
**80639 München (DE)**

(54) **COATED BASE FABRIC FOR AIRBAG AND AIRBAG INCLUDING SAME**

(57) The present invention addresses the problem of providing: a coated fabric for airbags that is less likely to have yarn slippage after being sewn, and that can also be compactly stored; and an airbag using the coated fabric. As means for achieving this object, a coated fabric for airbags that has a crimp ratio of 12% or more in the warp direction and a crimp ratio of 6% or less in the weft direction is provided.

EP 3 916 139 A1

**Description**

Technical Field

The present disclosure relates to a coated fabric for airbags, and an airbag comprising the fabric.

Background Art

In recent years, airbags have been widely used as safety equipment for occupant protection in vehicle collisions. As airbag fabrics, those obtained by coating the surface of woven fabric with silicone rubber or the like have been used to ensure low air permeability that is sufficient to prevent leakage of inflator gas. However, while airbags produced using such a surface-coated woven fabric, i.e., "coated airbags," have advantages in terms of low air permeability and high heat resistance, such coated airbags also have disadvantages of incurring considerably increased costs due to the coating treatment, and also having poor packageability due to heavy weight and thickness of the fabric itself. Therefore, it has become difficult for coated airbags to meet market demands for weight and size reduction. Accordingly, research has been conducted on airbags produced using a fabric for airbags whose surface is not coated, i.e., "non-coated airbags." However, in order for non-coated airbags to achieve the same level of air permeability as coated airbags, the fabric must have an increased weaving density.

Among various airbags, curtain airbags or like components that are wide in the width direction have been increasing produced as bags. Accordingly, there is an increasing demand for a fabric that can be easily folded when folded in one direction. In particular, there is an increasing demand for a fabric that can be easily folded when folded in a warp direction so that the component can be efficiently cut. Additionally, in cutting, there is also a concern that conventional fabrics for airbags are prone to yarn slippage after being sewn.

As a technique concerning fabrics applicable to a component wide in the width direction, such as curtain airbags, there is known a technique in which the amount of oil agent applied to the original yarn is specified so as to achieve a specific friction coefficient against metal and control the amount of coating agent applied, thus producing a fabric that has excellent packageability and is suitable for curtain airbags (for example, Patent Literature 1 (PTL 1)). However, such a technique may lead to deterioration of packageability when the fabric has a high weaving density.

Further, due to increased safety awareness for pedestrians and vehicle occupants, even lower air permeability and higher heat resistance than ever have been recently required. There has been a concern that subjecting a fabric with a usual weaving density to coating treatment alone does not enable the resulting coated airbag to exhibit the required performance. Thus, in order to achieve the required low air permeability and heat resistance, a fabric with a high weaving density must be coated.

Citation List

Patent Literature

PTL 1: JP2007-284826A

Summary of Invention

Technical Problem

The present disclosure was made in view of the above problems of the prior art. An object of the present disclosure is to provide a coated fabric for airbags that is less likely to have yarn slippage after being sewn, and that can be compactly stored; and an airbag produced using the coated fabric.

Solution to Problem

The present inventors conducted extensive research. As a result, the inventors found that the above problems can be solved by the following means, and accomplished the present disclosure. More specifically, the present inventors have succeeded in providing a fabric for airbags that has increased edgecomb resistance in the warp direction even when the fabric has a high weaving density, and that has decreased stiffness in the warp direction, both of which are achieved by adjusting the crimp ratio of the fabric for airbags in the warp direction; that has excellent yarn slippage resistance after being sewn and excellent packageability when used as an airbag, both of which are achieved by maintaining the slippage resistance in the weft direction and stiffness in the weft direction within allowable ranges for normal use; that further has light weight; and that can be produced at low cost. Specifically, the present disclosure includes the following subject matter.

1. A coated fabric for airbags having a crimp ratio of 12% or more in the warp direction, and a crimp ratio of 6% or less in the weft direction.

2. The coated fabric for airbags according to Item 1, wherein the coated fabric has a stiffness of 90 mm or less in the warp direction as determined based on two overlapping sheets of the fabric by a cantilever method.

3. The coated fabric for airbags according to Item 1 or 2, wherein the coated fabric has an edgecomb resistance of 1600 N or more in the warp direction, based on two overlapping sheets of the fabric.

4. The coated fabric for airbags according to any one of Items 1 to 3, comprising a synthetic-fiber multifilament that has a total fineness of 400 dtex or more and 600 dtex or less, the coated fabric having a weaving density of 56 threads/2.54 cm or more in both the warp and weft directions, and a cover factor of 2150 or more and 2600 or less.

5. The coated fabric for airbags according to any one of Items 1 to 4, wherein the amount of silicone resin applied is 5 g/m$^2$ or more and 25 g/m$^2$ or less.

6. An airbag comprising the coated fabric for airbags of any one of Items 1 to 5.

Advantageous Effects of Invention

The airbag produced by using the coated fabric for airbags according to the present disclosure is less likely to have yarn slippage after being sewn, and can be compactly packaged into a module.

Description of Embodiments

The coated fabric for airbags according to the present disclosure has a crimp ratio of 12% or more, preferably 12.5% or more, and more preferably 13% or more in the warp direction. The coated fabric for airbags according to the present disclosure also has a crimp ratio of 6% or less, preferably 5.5% or less, and more preferably 5.0% or less in the weft direction. Crimp ratios in the waft direction and in the weft direction within the above-mentioned numerical ranges impart to the coated fabric for airbags according to the present disclosure an edgecomb resistance that can sufficiently prevent yarn slippage after the fabric is sewn into an airbag, and also impart to the fabric a stiffness that enables the airbag produced using the fabric to have excellent packageability.

The crimp ratio in the present disclosure is measured in accordance with the method described in Method B of JIS L1096 (2010) 8.7.2. The load applied is 1/10 g per dtex.

The coated fabric for airbags according to the present disclosure preferably has a stiffness of 90 mm or less as determined based on two overlapping sheets of the fabric by a cantilever method. The method of determining the stiffness based on two overlapping sheets of the fabric by a cantilever method is a method of measurement assuming the state of the fabric for airbags actually being used as an airbag. Although a lower stiffness is preferable, the stiffness is 70 mm or more in practice.

The stiffness as determined based on two overlapping sheets of the fabric by a cantilever method in the present disclosure is measured by overlapping one piece of the fabric on the other piece in the same direction, sewing one end with a sewing thread (upper thread: 1400 dtex, lower thread: 940 dtex, pitch: 2.2 mm), and performing measurement in accordance with Method A of JIS L1096 (2010) 8.19.1 (45° cantilever method). Specifically, measurement is performed as described below.

Ten test specimens (about 20 mm × about 150 mm) each are cut out from a sample in the warp and weft directions, and two sheets of the fabric are overlapped one on top on the other in the same direction. One end is sewn with a sewing thread (1400 dtex, lower thread: 940 dtex, pitch: 2.2 mm). The five sewn test specimens in the warp direction and five test specimens in the weft direction are individually placed on a smooth horizontal table having a 45° slope at one end such that the short side of the test specimen is aligned with the scale baseline. Subsequently, the test specimen is allowed to gently slide toward the slope by an appropriate method. When the center point of one end of the test specimen has come into contact with the slope, the position of the other end is read from the scale. The stiffness is indicated by the length (mm) over which the test specimen has moved. The front and back surfaces of each of the five specimens are measured for stiffness.

The coated fabric for airbags according to the present disclosure preferably has an edgecomb resistance of 1600 N or more, and more preferably 1650 N or more, in the warp direction based on two layers of the fabric. The method for determining edgecomb resistance based on two overlapping sheets of fabric is a method of measurement assuming the state of the fabric for airbags actually being used as an airbag. An edgecomb resistance of 1600 N or more can reduce not only the yarn slippage after the fabric is sewn, but also excessive stitch opening of the coated fabric for airbags during the airbag deployment, making it easier to avoid burst risk.

In the present disclosure, the edgecomb resistance based on two overlapping sheets of the fabric is measured in accordance with ASTM D6479-15 with the two sheets of the fabric being overlapped in the same direction. Specifically, a mark is made at a position 5 mm from the edge of fabric samples in the same direction, and each fabric sample is accurately pierced with needles in the position. Two sheets of the fabric are placed one over the other, and measured. The edgecomb resistance in the warp direction is determined by piercing the fabric with pins along weft yarn, and measuring the maximum load when the weft yarn is shifted with the pins in the warp direction. The edgecomb resistance in the weft direction is determined by piercing the fabric with pins along the warp yarn, and measuring the maximum load when the warp yarn is shifted with the pins in the weft direction.

The coated fabric for airbags according to the present disclosure is a woven fabric formed from a synthetic-fiber multifilament. The synthetic-fiber multifilament that constitutes the coated fabric for airbags (yarn removed from the fabric) preferably has a total fineness of 400 dtex or more and 600 dtex or less, and more preferably 450 dtex or more and 550 dtex or less. A total fineness of 400 dtex or more of the synthetic-fiber multifilament that constitutes the coated fabric for airbags (yarn removed from the fabric) eliminates the need for overly increasing the weaving density and thus reduces an excessive increase in binding force of the warp yarn and weft yarn, thereby making it easier for the airbag produced using the coated fabric to have appropriate packageability. A total fineness of 600 dtex or less makes it easier to reduce an excessive increase in rigidity of the yarn that constitutes the woven fabric. A synthetic-fiber multifilament having a total fineness within the range of 400 dtex or more and 600 dtex or less is preferable because such a synthetic-fiber multililament is moderately flexible and thus makes it easier to impart excellent packageability to airbags produced using the coated fabric for airbags according to the present disclosure.

In the present disclosure, the total fineness of synthetic-fiber multifilament that constitutes a fabric for airbags (yarn removed from the fabric) is determined as follows. Warp and weft yarns are removed from a fabric obtained through a dry-finishing step, and measurement is performed in accordance with JIS L 1013 (2010) 8.3.1. Specifically, a sample with a length of 90 cm is accurately taken with an initial tension being applied. The absolute dry mass is measured, and the fineness based on corrected weight (dtex) is calculated using the following formula. The average of five measurements is determined to be the total fineness.

$$F0 = 1000 \times m / 0.9 \times (100 + R0) / 100$$

F0: Fineness based on corrected weight (dtex)
m: Absolute dry mass of sample (g)
R0: Official moisture content (%)

The coated fabric for airbags according to the present disclosure preferably has a weaving density of 56 threads/2.54 cm or more, and more preferably 57 threads/2.54 cm or more, in both the warp and weft directions. When the coated fabric for airbags woven in the aforementioned crimp ratio has a weaving density of 56 threads/2.54 cm or more, the coated fabric is less likely to have gaps between fibers, and a substantial deterioration in edgecomb resistance can be easily suppressed.

In the present disclosure, the weaving density is measured in accordance with JIS L1096 (2010) 8.6.1. Specifically, a sample is placed on a flat table, and unnatural wrinkles and tension are removed. The number of threads of the warp and weft in a 2.54-cm section is counted at five different areas, and the average is calculated per unit length and determined to be a weaving density.

From the standpoint of light weight and high packageability, the coated fabric for airbags according to the present disclosure preferably has a packageability of 3100 cm$^3$ or less, and more preferably 3000 cm$^3$ or less, in the packageability test prescribed in ASTM D6478-10(2014). From the standpoint of light weight and excellent packageability, the lower limit of packageability is preferably 1900 cm$^3$ or more, and more preferably 2100 cm$^3$ or more, based on a typically used coated fabric for airbags; however, the lower limit is not particularly limited thereto.

The packageability test in accordance with ASTM D6478-10 (2014) in the present disclosure is specifically performed as follows. A test specimen with a width (weft direction) of 750 ±5 mm and a length (warp direction) of 800 mm ±5 mm is taken from a sample, a plate with a width of 145 mm and a thickness of 2 mm is placed along the end portion in the warp direction, and the sample is folded along the warp yarn. This operation is performed five times to fold the specimen into an accordion shape. The plate is removed, and the folded sample is rotated 90°. A plate with a width of 95 mm and a thickness of 2 mm is placed along the end portion in the weft direction, and the woven fabric is then folded along the weft yarn. This operation is performed seven times to form the fabric into an accordion shape. The folded sample is placed in a storage box (inner dimension of bottom: 100 mm × 150 mm). The bulkiness (thickness) of the folded sample under a specific load is measured, and the packageability (cm$^3$) is then calculated using the following formula. The average of two measurements is determined to be the packageability.

(T20 + T40 + T60 + ... T180) * 100 * 150 / 1000 (cm$^3$)

(Tα: Bulkiness of the sample under a load of αN (mm); measurement is performed with α in 20 increments)

From the standpoint of mechanical characteristics, the coated fabric for airbags according to the present disclosure preferably has a tensile strength of 700 N/cm or more, and more preferably 750 N/cm or more. The upper limit of tensile strength is not particularly limited and is preferably 1000 N/cm or less, and more preferably 900 N/cm or less, taking into account the relationship between the total fineness, tensile strength of the synthetic-fiber multifilament, and the weaving density of the fabric for airbags.

In the present disclosure, the tensile strength of the fabric for airbags is measured in accordance with JIS L1096 (2010) 8.12.1. Specifically, a test is performed with a test specimen clamped by a tensile tester under initial tension at a tension rate of 200 m/min (width of the test specimen: 50 mm, length of the specimen between clamps: 200 mm) to measure the strength (N) at the time the fabric is torn apart. However, a case in which the specimen is torn apart within 10 mm from a clamp or abnormally torn apart is excluded.

The coated fabric for airbags according to the present disclosure preferably has an elongation at maximum force of 23% or more. The elongation of the coated fabric for airbags differs between the warp direction and the weft direction. Thus, a coated fabric for airbags having an elongation at maximum force of 23% or more in both the warp and weft directions makes it unlikely for stress to concentrate on a portion that does not stretch much during the deployment of an airbag produced using the coated fabric for airbags, thus maintaining a predetermined internal pressure during the airbag deployment. The coated fabric for airbags more preferably has an elongation at maximum force of 25% or more, and even more preferably 26% or more. Although a higher elongation at maximum force is preferable, the elongation at maximum force is preferably 40% or less, and more preferably 38% or less in practice.

In the present disclosure, the elongation at maximum force of a fabric for airbags is measured in accordance with JIS L1096 (2010) 8.12.1. Specifically, a test is performed with a test specimen clamped by a tensile tester under initial tension at a tension rate of 200 m/min (width of the test specimen: 50 mm, length of the specimen between clamps: 200 mm) to measure the elongation percentage (%) at the time the fabric is torn apart. However, a case in which the specimen is torn apart within 10 mm from a clamp or abnormally torn apart is excluded.

In the present disclosure, the coated fabric for airbags preferably has a cover factor (CF) of 2150 or more and 2600 or less, and more preferably 2200 or more and 2400 or less, taking into consideration the stiffness and edgecomb resistance defined in the present disclosure. The CF was measured using the following formula:

$$CF = (A \times 0.9)^{1/2} \times (W1) + (B \times 0.9)^{1/2} \times (W2)$$

wherein A and B indicate the thickness (dtex) of warp and weft, and W1 and W2 indicate a warp weaving density and a weft weaving density (threads/2.54 cm).

The material of the synthetic-fiber multifilament that constitutes the coated fabric for airbags according to the present disclosure is not particularly limited, and can be selected from a wide range of materials. To meet the characteristics described above, while taking economic efficiency into account, the material is preferably a multifilament composed of a polyamide based-resin or a polyester based-resin. Examples of polyamide-based resins include nylon 6, nylon 66, nylon 46, and the like. Examples of polyester based-resins include polyethylene terephthalate and the like. Of these, from the standpoint of heat capacity and flexibility, a multifilament composed of nylon 66 and/or nylon 46 is particularly preferable.

In the present specification, the "synthetic-fiber multifilament that constitutes the coated fabric for airbags according to the present disclosure" refers to a constituent yarn, more specifically, a fiber obtained by fibrillating the coated fabric for airbags according to the present disclosure; and is distinguished from a synthetic-fiber multifilament that is original yarn for use in producing the coated fabric for airbags according to the present disclosure. Specifically, some properties of the constituent yarn may change from those of the original yarn during the process of producing the coated fabric for airbags. Even in this case, the other properties are common between the constituent yarn and the original yarn.

The synthetic-fiber multifilament that constitutes the coated fabric for airbags according to the present disclosure may contain various additives that are typically used for improving the productivity or properties in the process of producing the original yarn, or in the process of producing the fabric. The synthetic-fiber multifilament that constitutes the coated fabric for airbags according to the present disclosure may contain, for example, at least one additive selected from the group consisting of heat stabilizers, antioxidants, light stabilizers, lubricants, antistatic agents, plasticizers, thickening agents, pigments, and flame retardants.

The synthetic-fiber multifilament that constitutes the coated fabric for airbags according to the present disclosure preferably has a high tensile strength in terms of mechanical characteristics, specifically preferably 6.5 cN/dtex or more, more preferably 7.0 cN/dtex or more, and still more preferably 7.5 cN/dtex or more. There is no particular limitation on the upper limit of tensile strength; however, when nylon 66 fiber is used, the use of nylon 66 having a tensile strength of 9.5 cN/dtex can provide the effects of the present disclosure.

In the present disclosure, the elongation at maximum force of the synthetic-fiber multifilament is measured in accordance with JIS L1013 (2010) 8.5.1. Specifically, a sample is held loosely with the clamps of a tensile tester, and the elongation at the time the sample is torn apart is measured.

The coated fabric for airbags according to the present disclosure preferably has an elongation at maximum force of 20% or more. The elongation of the coated fabric for airbags is different between the warp and weft directions. Therefore, when the coated fabric for airbags has an elongation at maximum force of 20% or more, the stress does not easily concentrate on a site with a small elongation when an airbag produced using the coated fabric for airbags is deployed, thus making it possible to maintain a predetermined internal pressure during the airbag deployment. The coated fabric for airbags preferably has an elongation at maximum force of 23% or more, and more preferably 25% or more. A relatively higher elongation at maximum force is preferable. In practice, however, the elongation at maximum force is preferably 35% or less, and more preferably 30% or less.

In the present disclosure, the elongation at maximum force of the synthetic-fiber multifilament is measured in accordance with JIS L1013 (2010) 8.5.1. Specifically, a sample is held loosely with the clamps of a tensile tester, and the elongation at the time the sample is torn apart is measured.

The fineness of single filaments that constitute the synthetic-fiber multifilament that constitutes the coated fabric for airbags according to the present disclosure is not particularly limited. From the standpoint of ensuring packageability of airbags produced using the coated fabric for airbags as well as operability in spinning, the fineness is preferably 5.0 dtex or less. The fineness of the single filaments is preferably 2.0 dtex or more, and more preferably 2.4 dtex or more.

The aspect ratio of the cross-sectional shape of the single filaments that constitute the synthetic-fiber multifilament that constitutes the coated fabric for airbags according to the present disclosure is preferably 1.4 or less. The cross-sectional shape of the single filaments of the yarn that constitutes the coated fabric for airbags may change from that of the single filaments of the original yarn due to influence such as tension during processing. When the cross-sectional shape of the single filaments of the yarn that constitutes the coated fabric for airbags has an aspect ratio of 1.4 or less, the cross-sectional surface of the yarn is regularly aligned in a predetermined direction when an airbag produced by using the coated fabric for airbags is folded, so that the desired low air permeability is easily obtained.

Examples of the woven structure of the coated fabric for airbags according to the present disclosure include plain weaves, twill weaves, satin weaves, and a variation of these structures. From the standpoint of excellent mechanical characteristics, plain weaves are preferable.

The original yarn for use in the production of the coated fabric for airbags according to the present disclosure may be a synthetic-fiber multifilament that can be obtained by ejecting a synthetic resin from a spinneret by using a typical melt-spinning method. The spinning conditions vary depending on the type of the synthetic resin (polymer) that serves as a starting material of the synthetic-fiber multifilament. Suitable conditions can be selected, taking into account, for example, the viscosity and thermal properties of the polymer. In general, in order to prevent the degradation of the polymer caused by heat, it is preferable to shorten the residence time of the polymer in a spinning machine, typically preferably within 10 minutes; and more preferably, a resistance time of about 1 to 5 minutes is recommended.

For example, when a fiber is produced using polyethylene terephthalate or polyhexamethylene adipamide as a starting polymer, it is preferable that a heating cylinder that has a length of about 5 cm or more and about 50 cm or less and that is controlled to a temperature of about 200°C or more and about 350°C or less and a relative humidity of about 85% is disposed immediately below the spinneret, while keeping the spinning temperature at 280°C or more and 310°C or less; and that the polymer is passed through this heating cylinder. Allowing the polymer to pass through the heating cylinder delays the solidification of the molten polymer, enabling the resulting fiber to have high strength. The conditions such as the length, temperature, and relative humidity of the heating cylinder can be optimized, for example, by adjusting the fineness of the single filaments that constitute the obtained fiber and the number of single filaments. Additionally, it is also effective to optionally purge the atmosphere inside the heating cylinder with a high-temperature inert gas and seal the cylinder in order to reduce thermal degradation caused by keeping the inside of the heating cylinder at a high temperature.

Next, after the spun yarn passes through the high-temperature atmosphere as described above, the yarn is cooled and solidified with cold air. Subsequently, after an oil agent is applied, the spun yarn is taken up by a take-up roll that controls the spinning speed. The undrawn yarn taken up by the take-up roll is usually drawn continuously; however, it is also possible to perform drawing in a separate step after the yarn is wound up. The spinning speed is usually 2000 m/min or less, and drawing can be performed by a usual thermal drawing method. Drawing is preferably multiple-step drawing that involves two or more steps. The draw ratio varies depending on, for example, the birefringence of undrawn yarn, drawing temperature, and the drawing ratio distribution in the multi-step drawing; and the draw ratio is preferably 1.5 times or more and 6.0 times or less, and more preferably 2.0 times or more and 5.5 times or less.

Subsequently, the drawn fibers can be subjected to heat fixation in accordance with an ordinary method. When heat fixation is performed, the tension and/or temperature in heat fixation may be changed.

In the drawing step or in the heat fixation step, running yarn may be entangled. Entangling can be performed by a known method, such as air entangling. In air entangling, a suitable degree of entangling can be achieved by, for example, changing the air pressure in accordance with the fineness and/or tension of yarn for use.

The synthetic-fiber multifilament as original yarn for use in the production of the coated fabric for airbags according to the present disclosure preferably has a higher tensile strength from the standpoint of mechanical characteristics. The synthetic-fiber multifilament preferably has a tensile strength of 7.0 cN/dtex or more, more preferably 7.5 cN/dtex or more, and still more preferably 8.0 cN/dtex or more. The upper limit of tensile strength is not particularly limited; however, when nylon 66 fiber is used, the upper limit is preferably 9.0 cN/dtex or less from the standpoint of original yarn production.

The synthetic-fiber multifilament as original yarn for use in the production of the coated fabric for airbags according to the present disclosure preferably has an elongation at maximum force of 15% or more, more preferably 18%, and still more preferably 20% or more. If the elongation at maximum forces of the multifilament is 15% or more, the stress does not easily concentrate on a portion that does not stretch much when an airbag produced using the coated fabric for airbags is deployed, thus making it possible to maintain a predetermined internal pressure during the airbag deployment. A relatively higher elongation at maximum force is preferable. However, from the standpoint of original yarn production, the elongation at maximum force is preferably 30% or less, and more preferably 25% or less.

In the present disclosure, the tensile strength and elongation at maximum force of the original yarn are measured in accordance with JIS L1013 (2010) 8.5.1. Specifically, a sample is held loosely with the clamps of a tensile tester, and the load and elongation at the time the sample is torn apart are measured.

The synthetic-fiber multifilament as original yarn for use in the production of the coated fabric for airbags according to the present disclosure preferably has a boiling-water shrinkage of 5% or more, and more preferably 8% or more, from the standpoint of reducing air permeability. An overly high boiling-water shrinkage percentage may result in increased thickness of the coated fabric for airbags after shrinkage processing. Thus, from the standpoint of packageability of the airbag produced using the coated fabric into a module, the synthetic-fiber multifilament as original yarn preferably has a boiling-water shrinkage of 15% or less, and more preferably 12% or less. When the boiling-water shrinkage percentage is within the above numerical range, low air permeability can be imparted to a coated fabric for airbags through the shrinkage treatment described later, and excellent packageability into a module can also be imparted to airbags produced using the coated fabric for airbags.

In the present disclosure, the boiling-water shrinkage of the original yarn is measured in accordance with Method B of JIS L 1013 (2010) for measuring the boiling-water shrinkage percentage. Specifically, the boiling-water shrinkage is measured as follows. An initial tension is applied to a sample, and two points 500 mm apart are marked. The initial tension is then removed, and the sample is immersed in hot water at 100°C for 30 minutes. The sample is then taken out, and gently wiped free of water with blotting paper or a cloth. The sample is air-dried, and then initial tension is applied again. The length between the two points is measured, and the dimensional change rate by boiling water (%) is calculated using the following formula. The average of three measurements is determined to be the boiling-water shrinkage percentage.

$$\Delta L = L - 500 / 500 \times 100$$

ΔL: Boiling-water shrinkage (%);
L: Length between two points (mm)

The synthetic-fiber multifilament that constitutes the coated fabric for airbags according to the present disclosure is preferably substantially untwisted yarn or loosely twisted yarn, and more preferably untwisted yarn. A synthetic-fiber multifilament that is substantially untwisted yarn or loosely twisted yarn ensures that the spread of single filaments that constitute the synthetic fiber is not hampered, lowering the air permeability of the coated fabric for airbags.

From the standpoint of the ease of spinning technique and quality, the cross-sectional surface of single filaments that constitute the original yarn for use in the production of the coated fabric for airbags according to the present disclosure is preferably a round cross-sectional surface. The "round cross-sectional surface" as referred to herein means a cross-sectional shape that has an aspect ratio (major axis/minor axis ratio of the cross-sectional surface of fiber) of 1.1 or less. Original yarn whose single filaments have a round cross-sectional surface is easier to spin; and is less likely to generate original yarn fluff when drawing is performed to increase synthetic fiber strength, compared with original yarn composed of single filaments that have an irregular cross-sectional surface, such as a flat cross-sectional surface or square cross-sectional surface.

The coated fabric for airbags according to the present disclosure can be obtained by weaving the original yarn described above.

To obtain a woven fabric using the above synthetic fiber multifilament, weaving can be performed by a general-purpose method using the synthetic fiber multifilament as is as warp and weft yarns. At this time, it is preferable that the yarns are not twisted or glued. By omitting these steps, the single filaments of the warp and weft yarns that constitute the woven fabric are easily spread, achieving low air permeability.

The loom for use in the process of producing the coated fabric for airbags according to the present disclosure is not particularly limited. Examples of usable looms include water-jet looms, air-jet looms, rapier looms, projectile looms, and the like. In view of weaving productivity, reduction in damage to the original yarn, no necessity of using a warp glue, etc., a water-jet loom and an air-jet loom are particularly preferred. From the standpoint of ease of removing the original yarn oil agent and warping oil agent during the processing, a water-jet loom, which is capable of removing these agents almost completely with water during weaving, is most preferable because the scouring step can be simplified.

The warp tension during weaving of the coated fabric for airbags according to the present disclosure is preferably 50 cN/thread or more and 200 cN/thread or less. When the warp tension is 50 cN/yarn or more, the warp yarn is less likely to become loose during weaving, thus being less likely to cause defects of the fabric or halting the loom. On the other hand, when the warp tension is 200 cN/thread or less, application of an excessive load to the warp can be easily avoided, thus being less likely to cause defects of the fabric.

When the coated fabric for airbags according to the present disclosure is woven, it is preferable to set the dwell angle of the reed to 60° or more and 120° or less in order to improve the cramp ratio in the weft direction, and to reduce fabric defects. A dwell angle of the reed outside this range cannot ensure the running region of the weft, possibly leading to many fabric defects.

When the coated fabric for airbags according to the present disclosure is woven, it is preferable to attach a guide roll between the back roll and the heddle so as to lift the warp 20 mm or more and 50 mm or less from the warp line, in order to improve the crimp ratio in the warp direction and to reduce fabric defects. A warp line positioning outside this range may lead to many fabric defects due to the difference in tension between the upper yarn and the lower yarn.

When the coated fabric for airbags according to the present disclosure is woven, it is preferable to attach a positive easing mechanism to the back roll in order to improve the crimp ratio in the warp direction, and to maintain fabric strength. The degree of easing in the positive easing mechanism is preferably 5 mm or more and 7.5 mm or less, and easing timing is preferably cross-timing of the loom ±30°. The use of the positive easing mechanism within this setting range enables the prevention of excessive tension applied to the warp yarn during shedding motion, and prevents excessive load from being applied onto the yarn, maintaining fabric strength. It is also possible to shed the warp under appropriate tension, so that the crimp ratio in the warp direction can be improved.

When the coated fabric for airbags according to the present disclosure is woven, it is preferable to adjust the pump diameter, the stroke, and the nozzle diameter in the direction in which the yarn feeding power is increased in order to improve the crimp ratio in the warp direction.

Subsequently, the obtained woven fabric is subjected to shrinkage processing, and then dried, thus obtaining the coated fabric for airbags according to the present disclosure.

Examples of shrinkage processing include heat-setting processes, such as hot-water processing and pin tenter. Hot-water processing using hot water in the shrinkage processing is preferable. Examples of methods using hot water include a method of immersing a woven fabric obtained by the weaving process described above in hot water, and a method of spraying a woven fabric with hot water. The temperature of hot water is preferably about 80°C or more and about 100°C or less, and more preferably 95°C or more. The woven fabric obtained by weaving may be subjected to shrinkage processing after being dried. However, from the standpoint of production costs, it is advantageous that the woven fabric obtained by weaving is subjected to shrinkage processing without drying, and then to dry finish.

The heating temperature in drying treatment in the production process for the coated fabric for airbags according to the present disclosure is not particularly limited, and is typically 80°C or more and 200°C or less, and preferably 160°C or less.

The coating resin for use in the coating step of the production process for the coated fabric for airbags according to the present disclosure is preferably an elastomer resin that has heat resistance, cold resistance, and flame retardancy. The most effective coating resin is a silicone based-resin. Specific examples of silicone based-resins include addition-polymerization silicone rubber and the like. Examples include dimethyl silicone rubber, methyl vinyl silicone rubber, methyl phenyl silicone rubber, trimethyl silicone rubber, fluorosilicone rubber, methyl silicone resin, methyl phenyl silicone resin, methyl vinyl silicone resin, epoxy-modified silicone resin, acrylic-modified silicone resin, polyester-modified silicone resin, and the like. Of these, methyl vinyl silicone rubber is preferable because this rubber has rubber elasticity after being cured, has excellent strength and elongation, and is also advantageous in terms of cost.

In the present disclosure, the resin viscosity of the silicone resin for use is very important. The silicone resin preferably has a viscosity of 15 Pa·sec or less, and more preferably 12 Pa·sec or less. The presence of resin in the woven-mesh portion is essential for increasing the tensile strength of a coated fabric. A resin viscosity of more than 15 Pa·sec fails to allow the resin to be present in the woven-mesh portion of the warp and weft on the non-coated surface. The lower limit is not particularly limited and is preferably 5 Pa·sec or more. As long as the viscosity can be adjusted so as to fall within the above numerical range, the resin may be either a solvent-based resin or a solventless resin. In consideration of environmental impact, a solventless resin is preferable.

In the present disclosure, the viscosity of a resin composition containing additives in addition to a resin is also defined as "resin viscosity."

The resin preferably has a film strength of 5 MPa or more, and a film elongation of 150% or less. In general, the film strength and film elongation are physical property values that are linked to each other. In particular, when a silicone resin is present in the woven-mesh portion of the warp and weft on the non-coated surface, a film elongation of 150% or less reduces the degree of freedom of yarns generated by the elongation of the resin, and holds the yarns, thus leading to rupture of the entire yarn at one time; this enables the fabric to have a high tensile strength. The film elongation is more preferably within the range of 120% or less. The upper limit of film strength is not particularly limited, and is preferably 10 MPa or less. From the standpoint of coated fabric flexibility, the film elongation is preferably 50% or more.

A sample for measuring the film strength and film elongation of a silicone resin is prepared under the same conditions as those for actually coating a woven fabric for airbags and forming a film (temperature, time, and pressure). Specifically, a resin film with a constant thickness of 0.5 mm is prepared from a silicone resin, and subjected to cure treatment at 190°C for 2 minutes by a hot-air irradiation method, followed by performing a tensile test.

The hardness of the resin is measured in accordance with ASTM D2240. The hardness measured with a Shore A durometer is preferably 45 or more, and more preferably 47 or more. A hardness of 45 or more restricts the motion of yarns caused by deformation of the resin during a tensile test, and holds the yarns, leading to rupture of the entire yarn at one time, as with the elongation of the resin; this enables the fabric to have a high tensile strength. The upper limit is not particularly limited, and is typically 70 or less.

An alkenyl group-containing polysiloxane, which is a component serving as a base resin that constitutes the coating layer of the coated fabric for airbags according to the present disclosure, contains two or more alkenyl groups bound to silicon atoms per molecule so that after being cured, the resin becomes a silicone resin film that has rubber elasticity. The silicon atoms to which alkenyl groups are bound in the alkenyl group-containing polysiloxane are positioned, for example, at the ends of the molecular chain or at any non-terminal position in the molecular chain (i.e., not at the ends of the molecular chain). However, linear polysiloxane containing alkenyl groups bound to silicon atoms at both the molecular chain terminal and non-terminal positions is preferred.

The alkenyl group-containing polysiloxane component preferably has a viscosity at 25°C of 10,000 Pa·sec or more and 30,000 mPa·sec or less, and particularly preferably 13,000 Pa·sec or more and 27,000 mPa·sec or less, from the standpoint of physical properties, such as adhesiveness of the cured product to fibers, rubber strength, and blocking resistance; and workability.

Organohydrogenpolysiloxane that constitutes the silicone resin undergoes a hydrosilylation addition reaction with the alkenyl group-containing polysiloxane, and acts as a crosslinking agent. The molecular structure of the organohydrogenpolysiloxane may be, for example, linear, cyclic, branched, or a three-dimensional network.

The organohydrogenpolysiloxane contains, per molecule, hydrogen atoms bound to at least two (typically, about two or more and about 300 or less) silicon atoms. When the organohydrogenpolysiloxane has a linear structure, the hydrogen atoms bound to these silicon atoms may be positioned either at the ends of the molecular chain or at any non-terminal position in the molecular chain (i.e., not at the ends of the molecular chain), or at both thereof.

Organohydrogenpolysiloxane (B) preferably has a viscosity at 25°C of 0.1 Pa·sec or more and 1,000 mPa·sec or less, and particularly preferably 0.1 Pa·sec or more and 500 mPa·sec or less.

Organohydrogenpolysiloxane (B) is added in such an amount that the number of hydrogen atoms bound to the silicon atoms in component (B) per alkenyl group bound to a silicon atom in component (A) is typically 1 or more and 20 or less, more preferably 1 or more and 10 or less, and particularly preferably 1 or more and 5 or less.

The film strength and film elongation of the resin can be adjusted by the molecular weight of alkenyl group-containing polysiloxane and the structure and the amount of organohydrogenpolysiloxane mixed.

When a silicone resin is used, a reactive curing agent may also be used. Typical examples include platinum or platinum compound catalysts (platinum-based catalysts). Known reactive curing agents are usable. Specific examples include platinum black, chloroplatinic acid, alcohol-modified products of chloroplatinic acid, and complexes of chloroplatinic acid with, for example, olefin, aldehyde, vinyl siloxane, or acetylene alcohol. The more a platinum compound catalyst is added, the more hydrosilylation is facilitated. However, a platinum compound catalyst is typically added to a composition in an amount of 100 ppm or more and 2000 ppm or less on a platinum metal basis.

To improve adhesiveness of the silicone resin to the fabric, the silicone resin preferably contains an adhesive aid. The adhesive aid is, for example, at least one member selected from the group consisting of amino-based silane coupling agents, epoxy-modified silane coupling agents, vinyl-based silane coupling agents, chloro-based silane coupling agents, and mercapto-based silane coupling agents; however, the adhesive aid is not limited to these silane coupling agents.

The silicone resin may contain, for example, a reinforcing inorganic filler such as fumed silica and dry silica; a crosslinkable silicone having the terminal groups adjusted (silicone resin); and a non-reinforcing inorganic filler such as calcium carbonate, calcium silicate, and titanium dioxide. The amount of these inorganic fillers is 0.1 parts by mass or more and 200 parts by mass or less, and more preferably 0.1 parts by mass or more and 100 parts by mass or less, based on the alkenyl group-containing polysiloxane component.

Further, the silicone resin may contain an inorganic pigment and/or an organic pigment as a colorant. Examples of inorganic pigments include carbon black, titanium oxide, red colcothar, black colcothar, titanium yellow, cobalt blue, and the like. Examples of organic pigments include condensed azo-based pigments (yellow, brown, red), isoindolinone-based pigments (yellow, orange), quinacridone-based pigments (red, purple), diketopyrrolopyrrole-based pigments (orange, red, purple), anthraquinone-based pigments (yellow, red, blue), dioxazine-based pigments (purple), benzimidazolone-based pigments (orange), copper phthalocyanine-based pigments (blue), allyl amide-based pigments (yellow), and the like.

The amount of the coating resin applied for the coated fabric for airbags according to the present disclosure is preferably 5 g/m$^2$ or more and 25 g/m$^2$ or less, and more preferably 10 g/m$^2$ or more and 23 g/m$^2$ or less. A resin amount of less than 5 g/m$^2$ may result in a low thickness of the resin layer on the surface of the woven fabric, leading to a failure to achieve reduced air permeability due to the failure to obtain a required resin thickness on the surface of the coated fabric. On the other hand, a resin application amount of more than 25 g/m$^2$ may decrease the flexibility of the coated fabric, not only impairing packageability, but also increasing the weight of the bag as a whole.

The top portion of the surface of the coated fabric for airbags according to the present disclosure preferably has an average resin thickness of 4 μm or more, and more preferably 6 μm or more in the warp and weft directions. The "top portion" refers to the thinnest portion in terms of resin film thickness in the warp yarn or the weft yarn. In the present disclosure, it is preferred that the resin does not seep well inside the woven fabric but is present on the entire coated surface of the woven fabric, in particular, also on the top portion of the woven fabric, with a relatively uniform film thickness. An average resin thickness of less than 4 μm may result in a failure to achieve reduced air permeability and flame retardancy. Although the upper limit is not particularly set, an average resin thickness of more than 25 μm makes it difficult to apply the resin by knife coating.

In the present disclosure, the resin is applied by a known method. From the standpoint of ease of adjusting the coating amount and impact of foreign matter (protruding objects) contamination, a knife-coating method is preferable; in particular, a knife-on-air method is most preferable. In a knife-on-bed method, the resin easily seeps inside the woven fabric. However, in this method, it is difficult for the resin to be present on the top portion of the coated surface of the woven fabric, thereby likely failing to achieve reduced air permeability, which is generally required in coated fabrics. In the present disclosure, the knife for use in a knife coating method has a knife blade with an edge shape such as a semicircular shape or an angular shape.

In knife coating by the knife-on-air method, the fabric tension in the direction in which the fabric advances is preferably 300 N/m or more and 800 N/m or less, and more preferably 400 N/m or more and 750 N/m or less. When the fabric tension in the direction in which the fabric advances is less than 400 N/m, selvages of the base fabric become bulky, which likely makes a substantial difference in the coating amount between the central area and the terminal area of the fabric. When the fabric tension in the direction in which the fabric advances is more than 800 N/m, voids between warp and weft are closed, and the resin cannot be present in the woven-mesh portions of the warp and the weft of the non-coated surface.

In the present disclosure, it is important that the push-in depth made by a knife is 1 mm or more and 6 mm or less. In the knife-on-air method, the push-in depth made by a knife refers to the depth made when a knife is pushed downward from the upper surface of the bed positioned immediately before the knife, which is 0 mm in height. The push-in depth is more preferably 1.5 mm or more and 4.5 mm or less. When the push-in depth by a knife is less than 1 mm, the resin cannot be present in the woven-mesh portions of the warp and the weft of the non-coated surface; this is against the purpose of the present disclosure. When the push-in depth by a knife is more than 6 mm, the resin can easily seep into the woven fabric; however, it is difficult for the resin to be present on the top portion of the coated surface of the fabric, resulting in a failure to achieve reduced air permeability, which is generally required in coated fabrics.

The method for drying and curing the applied coating agent may be a typical heating method, such as methods using hot air, infrared light, microwave, etc. Regarding the heating temperature and time period, it is sufficient if the temperature reaches the point at which the silicone resin is cured. Preferably, the heating temperature is 150°C or more and 220°C or less, and the heating time is 0.2 minutes or more and 5 minutes or less.

Airbags prepared using the coated fabric for airbags according to the present disclosure can be suitably used in, for example, driver-side airbags, front-passenger-side airbags, curtain airbags, side airbags, knee airbags, seat airbags, and reinforcing cloth. Accordingly, these products are also included in the scope of the present disclosure. When a component long in the weft direction is cut out from the coated fabric for airbags according to the present disclosure, the component is less likely to have yarn slippage after being sewn. Therefore, airbags prepared using the coated fabric for airbags according to the present disclosure are preferably those that require a component particularly long in the weft direction. Specifically, side-curtain airbags are preferable. Further, since the coated fabric for airbags according to the present disclosure is particularly excellent in packageability, airbags particularly required to have packageability are also preferable. Specifically, driver-side airbags, front-passenger-side airbags, and curtain airbags are preferable. Airbags prepared using the coated fabric for airbags according to the present disclosure are more preferably those that are a component required to be long in the weft direction and to have packageability. Specifically, side-curtain airbags are more preferable.

Examples

The present disclosure is described in more detail below with reference to the Examples; however, the present disclosure is not limited to the following Examples. Appropriate modifications may certainly be made as long as they are within the concepts stated above and below. Such modifications are all within the technical scope of the present disclosure.

The following are test methods for various properties used in the Examples below.

Crimp Ratio of Fabric

The measurement was performed in accordance with Method B of JIS L 1096 (2010) 8.7.2. The load applied was 1/10 g per dtex.

Stiffness Based on Two Overlapping Sheets of Fabric (in the Warp Direction)

One piece of the fabric was overlaid on the other piece in the same direction, and one end was sewn with a sewing thread (upper thread: 1400 dtex, lower thread: 940 dtex, pitch: 2.2 mm). The measurement was then performed in accordance with Method A of JIS L1096 (2010) 8.19.1 (45° cantilever method). Specifically, measurement was performed as described below. Ten test specimens (about 20 mm $\times$ about 150 mm) were cut out from a sample in the warp direction, and two test specimens were overlaid one on top of the other. One end was sewn with a sewing thread (1400 dtex, lower thread: 940 dtex, pitch: 2.2 m). The five sewn test specimens in the warp direction were placed on a smooth horizontal table having a 45° slope at one end such that the short side of the test specimen was aligned with the scale baseline. Next, the test specimen was allowed to gently slide toward the slope by an appropriate method. When the central point of one end of the test specimen came into contact with the slope, the position of the other end was read from the scale. The stiffness was indicated by the length (mm) over which the test specimen moved. The front and back surfaces of each of the five specimens were measured for stiffness.

Edgecomb Resistance Based on Two Overlapping Sheets of Fabric (in the Warp Direction)

The measurement was performed in accordance with ASTM D6479-15, with two sheets of fabric overlapping in the same direction. Specifically, a mark was made at a position 5 mm from the edge of fabric samples, and each fabric sample was accurately pierced with needles in the position. Two sheets of the fabric were placed one over the other, and measured. The edgecomb resistance in the warp direction was determined by piercing the fabric with pins along weft yarn, and measuring the maximum load when the weft yarn was shifted with the pins in the warp direction.

Weaving Density of Fabric

The measurement was performed in accordance with JIS L 1096 (2010) 8.6.1. More specifically, the sample was placed on a flat table, and unnatural wrinkles and tension were removed. The number of warp and weft yarns in a 2.54-cm section was counted at five different areas, and the average was calculated per unit length and determined to be the density.

Weight of Fabric

The measurement was performed in accordance with JIS L 1096 (2010) 8.4.1. Two test specimens (about 200 mm $\times$ 200 mm) were taken from the sample, the absolute dry mass (g) of each test specimen was weighed, and the mass per m$^2$ (g/m$^2$) was calculated. The average was determined to be the weight.

Packageability of Fabric

The measurement was performed according to ASTM D 6478-10 (2014). A test specimen with a width (weft direction) of 750 $\pm$5 mm and a length (warp direction) of 800 mm $\pm$5 mm was taken from the sample, a plate with a width of 145 mm and a thickness of 2 mm was placed along the end portion in the warp direction, and the sample was folded along the warp yarn. This operation was performed five times to fold the specimen into an accordion shape. The plate was removed, and the folded sample was rotated 90°. A plate with a width of 95 mm and a thickness of 2 mm was placed along the end portion in the weft direction, and the woven fabric was then folded along the weft yarn. This operation was performed seven times to form the fabric into an accordion shape. The folded sample was placed in a storage box (inner dimension of bottom: 100 mm x 150 mm). The bulkiness (thickness) of the folded sample under a specific load was measured, and the packageability (cm³) was calculated using the following formula. The average of two measurements was determined to be the packageability.

$$[T\ 20\ +\ T\ 40\ +\ T\ 60\ +\ ...\ T\ 180]\ *\ 100\ *\ 150\ /\ 1000\ (cm^3)$$

(Tα: Bulkiness of the sample under a load of αN (mm); measurement was performed with α in 20 increments.)

Tensile Strength and Elongation at Maximum Force of Fabric

The measurement was performed in accordance with JIS L 1096 (2010) 8.12.1. The test was performed with a test specimen clamped by a tensile tester under initial tension at a tension rate of 200 m/min (width of the test specimen: 50 mm, length of the test specimen between clamps: 200 mm) to measure the strength (N) and elongation (%) at the time that the fabric was torn apart. However, a case in which the specimen was torn apart within 10 mm from a clamp or abnormally torn apart was excluded.

Air Permeability of Fabric

The air permeability was measured at a pressure of 20 kPa with a high-pressure air permeability measuring device (OEM Systems Co., Ltd.).

Coating Amount of Resin on Fabric

After the resin was cured, a coated fabric was accurately sampled as a 5 cm × 5 cm piece, and immersed in a solvent for dissolving only the fibers of the fabric (e.g., the solvent for polyamide 66 is hexafluoroisopropanol) to allow the fabric to dissolve. Subsequently, only the silicone-coated layer, which is insoluble matter, was recovered and washed with acetone, followed by vacuum-drying and measuring the sample weight. The amount of coating was indicated by mass per m² (g/m²).

Total Fineness of Synthetic-Fiber Multifilament that Constitutes Fabric (Yarn Removed From the Fabric)

The total fineness of the synthetic-fiber multifilament that constitutes the fabric for airbags (yarn removed from the fabric) is determined as follows. Warp and weft yarns are removed from a fabric obtained through a dry-finishing step, and measured in accordance with JIS L 1013 (2010) 8.3.1. Specifically, a sample with a length of 90 cm is accurately taken with an initial tension being applied. The absolute dry mass is weighed, and the fineness based on corrected weight (dtex) is calculated using the following formula. The average of five measurements is determined to be the total fineness.

$$F0\ =\ 1000\ \times\ m\ /\ 0.9\ \times\ (100\ +\ R0)\ /\ 100$$

F0: Fineness based on corrected weight (dtex)
m: Absolute dry mass of sample (g)
R0: Official moisture content (%)

Tensile Strength and Elongation at Maximum Force of Synthetic-Fiber Multifilament that Constitutes Fabric (Yarn Removed From Fabric)

The measurement was performed in accordance with JIS L 1013 (2010) 8.5. A sample was held loosely with the clamps of a tensile tester, and the load and elongation at the time that the sample was torn apart were measured.

Total Fineness of Original Yarn

The measurement was performed in accordance with JIS L 1013 (2010) 8.3.1. Specifically, a sample with a length of 90 cm was accurately taken with an initial tension being applied. The absolute dry mass was weighed, and the fineness based on corrected weight (dtex) was calculated using the following formula. The average of five measurements was determined to be the total fineness.

$$F0 = 1000 \times m / 0.9 \times (100 + R0) / 100$$

F0: Fineness based on corrected weight (dtex)
L: Sample length (m)
m: Absolute dry mass of sample (g)
R0: Official moisture content (%)

Tensile Strength and Elongation at Maximum Force of Original Yarn

The measurement was performed in accordance with JIS L 1013 (2010) 8.5. The sample was held loosely with the clamps of a tensile tester, and the load and elongation at the time that the sample was torn apart were measured.

Boiling-water shrinkage of Original Yarn

The measurement was performed in accordance with Method B of JIS L 1013 (2010) for measuring the boiling-water shrinkage percentage. An initial tension was applied to a sample, and two points were marked by accurately measuring the length of 500 mm. Thereafter, the initial tension was removed, and the sample was immersed in hot water at 100°C for 30 minutes. The sample was then taken out, and gently wiped out of water with blotting paper or a cloth. After the sample was air-dried, the initial tension was applied again, and the length between the two points was measured to calculate the dimensional change (%) by boiling water according to the following formula. The average of three measurements was determined to be the boiling-water shrinkage percentage.

$$\Delta L = L - 500/500 \times 100$$

$\Delta L$: Boiling-water shrinkage (%);
L: Length between two points (mm)

Example 1

Nylon 66 original yarn having a fineness of 470 dtex/144f, a tensile strength of 8.3 cN/dtex, an elongation at maximum force of 21.0%, and a boiling-water shrinkage of 9.3% (having a round monofilament cross-section) was used as weft and warp to weave a plain-weave fabric using a water-jet loom by setting the weaving density to 53.0 threads/2.54 cm for both weft and warp, and setting the weaving conditions to those shown in Table 1. Then, without drying, the fabric was allowed to pass through a hot-water shrink tank at 98°C and subsequently subjected to a dry finishing process using a two-step suction drum dryer in which the temperature of the first step T1 was controlled to 120°C, and the temperature of the second step T2 was controlled to 125°C.

Next, a solvent-free silicone resin composition was applied in a coating amount of 15 g/m² to one surface of the fabric by the knife-on-air method. Further, a curing treatment was performed at 190°C for 2 minutes, thus obtaining a coated fabric. The characteristics of the obtained coated fabric were evaluated. Table 1 shows the physical properties of the obtained fabric.

Example 2

Nylon 66 original yarn having a fineness of 470 dtex/144f, a tensile strength of 8.3 cN/dtex, an elongation at maximum force of 21.0%, and a boiling-water shrinkage of 9.3% (having a round monofilament cross-section) was used as weft and warp to weave a plain-weave fabric using a water-jet loom by setting the weaving density to 52.5 threads/2.54 cm for both weft and warp, and setting the warp tension to 180 cN/thread. Then, without drying, the fabric was allowed to pass through a hot-water shrink tank at 98°C and subsequently subjected to a dry finishing process using a two-step suction drum dryer in which the temperature of the first step T1 was controlled to 120°C, and the temperature of the second step T2 was controlled to 125°C.

Next, a solvent-free silicone resin composition was applied in a coating amount of 15 g/m² to one surface of the fabric by the knife-on-air method. Further, a curing treatment was performed at 190°C for 2 minutes, thus obtaining a coated fabric. The characteristics of the obtained coated fabric were evaluated. Table 1 shows the physical properties etc. of the obtained fabric.

Example 3

Nylon 66 original yarn having a fineness of 470 dtex/144f, a tensile strength of 8.3 cN/dtex, an elongation at maximum force of 21.0%, and a boiling-water shrinkage of 9.3% (having a round monofilament cross-section) was used as weft and warp to weave a plain-weave fabric using a water-jet loom by setting the weaving density to 53.0 threads/2.54 cm for both weft and warp and setting the weaving conditions to those shown in Table 1. Then, without drying, the fabric was allowed to pass through a hot-water shrink tank at 98°C and subsequently subjected to a dry finishing process using a two-step suction drum dryer in which the temperature of the first step T1 was controlled to 120°C, and the temperature of the second step T2 was controlled to 125°C.

Next, a solvent-free silicone resin composition was applied in a coating amount of 25 g/m$^2$ to one surface of the fabric by the knife-on-air method in the same manner as in Example 1. Further, a curing treatment was performed at 190°C for 2 minutes, thus obtaining a coated fabric. The characteristics of the obtained coated fabric were evaluated. Table 1 shows the physical properties of the obtained fabric.

Comparative Example 1

Nylon 66 original yarn having a fineness of 470 dtex/136f, a tensile strength of 8.6 cN/dtex, an elongation at maximum force of 20.0%, and a boiling-water shrinkage of 9.3% (having a round monofilament cross-section) was used as weft and warp to weave a plain-weave fabric using a water-jet loom by setting the weaving density to 53 threads/2.54 cm for both weft and warp, and setting the weaving conditions to those shown in Table 1. Then, without drying, the fabric was allowed to pass through a hot-water shrink tank at 80°C and subsequently dried in a heated drum at 110°C for 40 seconds.

Next, a solvent-free silicone resin composition was applied in a coating amount of 15 g/m$^2$ to one surface of the fabric by the knife-on-air method in the same manner as in Example 1. Further, a curing treatment was performed at 190°C for 2 minutes, thus obtaining a coated fabric. The characteristics of the obtained coated fabric were evaluated. Table 1 shows the physical properties of the obtained fabric.

Table 1

| Item | | Unit | Example 1 | Example 2 | Example 3 | Comp. Ex.1 |
|---|---|---|---|---|---|---|
| Original yarn total fineness | | Dtex | 470 | 470 | 470 | 470 |
| Number of original yarn filaments | | threads | 144 | 144 | 144 | 136 |
| Original yarn single filament fineness | | dtex | 3.7 | 3.7 | 3.7 | 3.5 |
| Original yarn cross-sectional shape | | - | Round cross-section | Round cross-section | Round cross-section | Round cross-section |
| Original yarn tensile strength | | cN/dtex | 8.3 | 8.3 | 8.3 | 8.6 |
| Original yarn elongation at maximum force | | % | 21.0 | 21.0 | 21.0 | 20.0 |
| Original yarn boiling-water shrinkage | | % | 9.3 | 9.3 | 9.3 | 9.3 |
| Weaving loom | | - | WJL | WJL | WJL | WJL |
| Determined density | warp | threads/ 2.54 cm | 53.0 | 52.5 | 53.0 | 53.0 |
| | weft | | 53.0 | 52.5 | 53.0 | 53.0 |
| Warp tension in weaving | | cN/thread | 150 | 180 | 150 | 160 |
| Dwell angle in weaving | | ° | 85 | 60 | 85 | 0 |
| Warp line height in weaving | | mm | 38 | 30 | 38 | 60 |
| Easing degree in weaving | | mm | 5 | 7.5 | 5 | 2.5 |
| Easing timing in weaving | | ° | 330 | 330 | 330 | 310 |

(continued)

| Item | | Unit | Example 1 | Example 2 | Example 3 | Comp. Ex.1 |
|---|---|---|---|---|---|---|
| Cross-timing in weaving | | ° | 330 | 330 | 330 | 330 |
| Shrinkage treatment system | | - | Hot-water laver | Hot-water layer | Hot-water laver | Hot-water laver |
| Treatment temperature | | °C | 98 | 98 | 98 | 80 |
| Amount of coatinq agent applied | | g/m$^2$ | 15 | 15 25 | | 15 |
| Total fineness of yarn removed from fabric | | dtex | 482 481 | 480 483 | 482 481 | 482 483 |
| Number of filaments of the yarn removed from the fabric | warp | threads | 144 | 144 | 136 | 144 |
| | weft | | 144 | 144 | 136 | 144 |
| Single filament fineness of yarn removed from the fabric | warp | dtex | 3.3 | 3.3 | 3.3 | 3.5 |
| | weft | | 3.3 | 3.4 | 3.3 | 3.6 |
| Tensile strength of yarn removed from the fabric | warp | cN/dtex | 7.3 | 7.4 | 7.3 | 7.0 |
| | weft | | 7.4 | 7.3 | 7.4 | 7.4 |
| Elongation at maximum force of yarn removed from the fabric | warp | % | 27 | 28 | 27 | 28 |
| | weft | | 24 | 24 | 24 | 27 |
| Crimp ratio | warp | % | 13.1 | 14.0 | 13.1 | 11.2 |
| | weft | % | 4.6 | 5.2 | 4.6 | 3.6 |
| Stiffness based on two overlapping sheets of fabric (warp direction) | | mm | 87 | 85 | 83 | 92 |
| Edgecomb resistance based on two overlapping sheets of fabric (warp yarn director) | | N | 1630 | 1650 | 1764 | 1420 |
| Weight | | g/m$^2$ | 257 | 271 | 266 | 255 |
| Weaving density | warp | threads/2.54 cm | 58.1 | 57.4 | 58.1 | 57.2 |
| | weft | threads/2.54 cm | 57.5 | 57.4 | 57.5 | 57.2 |
| Cover factor | | - | 2406 | 2390 | 2406 | 2384 |
| Tensile strength | warp | N/cm | 769 | 797 | 794 | 763 |
| | weft | N/cm | 780 | 801 | 775 | 780 |
| Elongation at maximum force | warp | % | 36 | 42 | 39 | 36 |
| | weft | % | 38 | 34 | 30 | 29 |
| Air permeability | 20 Kpa | L/cm$^2$/min | 0.00 | 0.00 | 0.00 | 0.00 |
| Packageability | | cm$^3$ | 2946 | 2915 | 2962 | 3149 |

The fabrics of Examples 1 to 3 had excellent yarn slippage resistance. The results of these fabrics in the packageability test were also excellent. The fabric according to the present disclosure, which has such an excellent yarn slippage resistance after being sewn and excellent packageability, is useful as a coated fabric for airbags.

The embodiments of the present disclosure and the Examples are described above; however, the embodiments and the Examples disclosed as above are examples in all respects, and are not restrictive. The scope of the present disclosure is shown in the claims and encompasses concepts equivalent to the scope of the claims, as well as all modifications within the scope thereof.

Industrial Applicability

According to the present disclosure, the crimp ratio of a coated fabric for airbags in the warp direction is specified, whereby there can be obtained a fabric for airbags that has increased edgecomb resistance in the warp direction even when the fabric has a high weaving density, that has decreased stiffness in the warp direction, that is less likely to have yarn slippage after being sewn, and that can be compactly stored in a module and thus has excellent packageability, thereby making a significant contribution to industry.

**Claims**

1. A coated fabric for airbags having a crimp ratio of 12% or more in the warp direction, and a crimp ratio of 6% or less in the weft direction.

2. The coated fabric for airbags according to claim 1, wherein the coated fabric has a stiffness of 90 mm or less in the warp direction as determined based on two overlapping sheets of the fabric by a cantilever method.

3. The coated fabric for airbags according to claim 1 or 2, wherein the coated fabric has an edgecomb resistance of 1600 N or more in the warp direction, based on two overlapping sheets of the fabric.

4. The coated fabric for airbags according to any one of claims 1 to 3, comprising a synthetic-fiber multifilament that has a total fineness of 400 dtex or more and 600 dtex or less, the coated fabric having a weaving density of 56 threads/2.54 cm or more in both the warp and weft directions, and a cover factor of 2150 or more and 2600 or less.

5. The coated fabric for airbags according to any one of claims 1 to 4, wherein the amount of silicone resin applied is 5 g/m$^2$ or more and 25 g/m$^2$ or less.

6. An airbag comprising the coated fabric for airbags of any one of claims 1 to 5.

# EP 3 916 139 A1

<table>
<tr><td colspan="2"><b>INTERNATIONAL SEARCH REPORT</b></td><td>International application No.<br>PCT/JP2020/002405</td></tr>
</table>

**A. CLASSIFICATION OF SUBJECT MATTER**
D03D 1/02(2006.01)i; B60R 21/235(2006.01)i
FI: D03D1/02; B60R21/235

According to International Patent Classification (IPC) or to both national classification and IPC

**B. FIELDS SEARCHED**

Minimum documentation searched (classification system followed by classification symbols)
D03D1/00-27/18; B60R21/16-21/33

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-284826 A (TORAY INDUSTRIES, INC.) 01.11.2007 (2007-11-01) claims, paragraphs [0058]-[0059], [0074] | 1-6 |
| Y | WO 2013/168730 A1 (TOYOBO CO., LTD.) 14.11.2013 (2013-11-14) paragraph [0034], example 2 | 1-6 |
| Y | WO 2015/050004 A1 (TOYOBO CO., LTD.) 09.04.2015 (2015-04-09) paragraph [0034], example 1 | 1-6 |
| A | WO 2013/118755 A1 (TOYOBO CO., LTD.) 15.08.2013 (2013-08-15) claims | 1-6 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March 2020 (02.03.2020) | 17 March 2020 (17.03.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| Patent Documents referred in the Report | Publication Date | Patent Family | Publication Date |
|---|---|---|---|
| JP 2007-284826 A | 01 Nov. 2007 | (Family: none) | |
| WO 2013/168730 A1 | 14 Nov. 2013 | EP 2848717 A1 paragraph [0035], example 2 US 2015/0079864 A1 CN 104271822 A KR 10-2015-0014449 A BR 112014027036 A | |
| WO 2015/050004 A1 | 09 Apr. 2015 | JP 2015-71845 A JP 5505552 B1 | |
| WO 2013/118755 A1 | 15 Aug. 2013 | EP 2813606 A1 claims US 2015/0017859 A1 CN 104093894 A KR 10-2014-0126354 A ES 2642000 T PT 2813606 T PL 2813606 T | |

**INTERNATIONAL SEARCH REPORT**
Information on patent family members

International application No.

PCT/JP2020/002405

Form PCT/ISA/210 (patent family annex) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007284826 A